# EUROPEAN PATENT APPLICATION

(11) **EP 4 316 632 A1**
(43) Date of publication of application: **07.02.2024**
(21) Application number: 21931978.7
(22) Date of filing: 22.03.2021
(51) Int. Cl.: B01D 61/44, C25B 1/00, C25B 1/16

(54) **SYSTEM FOR THE PRODUCTION OF LITHIUM HYDROXIDE (LIOH) DIRECTLY FROM LITHIUM CHLORIDE (LICI), WITHOUT THE NEED FOR THE INTERMEDIATE PRODUCTION OF LITHIUM CARBONATE OR THE LIKE**

(71) Applicant: Sociedad Quimica y Minera de Chile, S.A., Santiago, 7550079 (CL)
(72) Inventor: MELIPILLAN, Pablo, Santiago, 7550079 (CL); MERUANE, Gabriel, Santiago, 7550079 (CL)
(74) Representative: ETL IP Patent- und Rechtsanwaltsgesellschaft mbH
(86) International application number: PCT/CL2021/050016
(87) International publication number: WO 2022/198343

(57) **Abstract**

The present invention relates to a system for the production of lithium hydroxide (LiOH) directly from lithium chloride (LiCI), without the need for the intermediate production of lithium carbonate or the like. Specifically, the invention relates to a system comprising the equipment necessary for the direct production of lithium hydroxide from lithium chloride. The system comprises interconnected main subsystems, a subsystem for the production of high-purity LiOH.H20, which comprises conversion and crystallization units, and a subsystem for the production of NaCl, which comprises NaCl causticization and crystallization units, all of which enable the production of high-purity lithium hydroxide monohydrate, and sodium chloride as a byproduct of the system.

## Description

This invention patent application relates to a system for the production of lithium hydroxide (LiOH) directly from lithium chloride (LiCI), without the need for an intermediate production of lithium carbonate or the like. Specifically, the invention refers to a system consisting of the equipment and arragenment necessary for the direct production of lithium hydroxide from lithium chloride. The system comprises interconnected main sub-systems, a subsystem for the production of high-purity LiOH.H2O, which comprises conversion and crystallization units, and subsystem for the production of NaCl, consisting of causticization and crystallization units, all of which enable the production of high-purity lithium hydroxide monohydrate, and sodium chloride as a byproduct of the system.

### PRIOR ART

The use of lithium in its multiple chemical formulations has gained traction in the technological world in general over the last years. Among those formulations is lithium hydroxide, which is mainly used in the production of lubricating greases capable of operating under extreme temperature and load conditions. Approximately 70% of the lubricating greases produced in the world contain lithium. Lithium hydroxide is also used in batteries and dyes.

According to the 2017 publication of the Chilean Copper Commission "INTERNATIONAL LITHIUM MARKET AND ITS POTENTIAL IN CHILE", lithium is a metal whose properties are currently highly valued, including its high levels of electrical conductivity, low viscosity, in addition to its being very light and having a low thermal expansion coefficient. As a result of these qualities, lithium has multiple applications in the industrial sector and specifically in the field of batteries, given the current technological trend.

Electromobility, driven by environmental campaigns and regulations to reduce the use of fossil fuels, coupled with the technological development of electronic devices and energy storage systems, are all factors that are putting upward pressure on future lithium demand. The substantial projected growth for electric cars, using rechargeable batteries as a source of energy, has driven the projected demand for lithium, due to the higher charge density of lithium-ion batteries, in addition to the substantial price reductions experienced by these batteries.

When taken from brine sources, lithium is usually extracted by pumping the brine to the surface for concentration in evaporation ponds, by means of a series of solar ponds (conventional method), ultimately producing a concentrated lithium chloride (LiCI) solution. This lithium-rich solution is then processed to produce lithium carbonate and then lithium hydroxide.

In terms of products, the main lithium compounds that are marketed and produced are lithium carbonate (Li2CO3), lithium hydroxide monohydrate (LiOH.H2O), and lithium chloride (LiCI), with carbonate accounting for the largest output.

One of the advantages of lithium operations in salt flats is that the cost of pumping the brine, concentrating it in evaporation ponds, and then processing the solution in a plant to obtain lithium carbonate or hydroxide, is lower than mining it from ore. The latter type of mining involves processes similar to rock mining involving drilling, blasting, ore concentration and transportation.

Currently, Lithium hydroxide (LiOH) is produced from Lithium Carbonate or Lithium Sulfate, and there are no commercial manufacturing alternatives from lithium chloride (LiCI).

In general, in terms of the prior art, the systems or plants described above are those used for the production of lithium carbonate, which is subsequently used to obtain LiOH. Therefore, it is not possible to find a process that produces LiOH from LiCI without producing Lithium Carbonate. Thus, for example, Patent Publication US 10648090 describes an integrated system for generating a lithium salt from a liquid resource, which consists of the following:
(a) providing an ion exchange unit, where said ion exchange unit comprises ion exchange particles containing hydrogen ions;
(b) contacting the ion exchange particles in said ion exchange unit with the liquid resource, wherein hydrogen ions from said ion exchange particles are exchanged with lithium ions from said liquid resource, producing lithium-enriched ion exchange particles in such ion exchange unit;
(c) treating said lithium-enriched ion exchange particles with an acid solution, wherein lithium ions, from said lithium-enriched ion exchange particles, are exchanged with hydrogen ions from said acid solution, producing a lithium eluate;
(d) optionally, providing a first crystallizer for treating said lithium eluate produced in step (c) with a precipitant, in order to precipitate said lithium salt and create a residual eluate;
(e) providing an electrolysis system in fluid communication with said ion exchange unit, or in fluid communication with said first crystallizer, wherein said electrolysis system comprises (A) one or more electrochemically reducing electrodes, (B) one or more electrochemically oxidizing electrodes, and (C) one or more ion conducting membranes;
(f) (i) passing said lithium eluate obtained from step (c) through said electrolysis system, or
   (ii) passing said residual eluate obtained from step (d) through said electrolysis system; (g) (i) subjecting said lithium eluate obtained from step (c) to an electric current in said electrolysis system of step (e), wherein said electric current causes electrolysis of said lithium eluate obtained from step (c), producing an acidified solution and a lithium salt solution, or
   (ii) subjecting the residual eluate obtained from step (d) to an electric current in said electrolysis system of step (e), wherein said electric current causes electrolysis of said residual eluate, producing an acidified solution and a basified solution; and
(g) optionally, providing a second crystallizer in order to crystallize the lithium salt solution from step (i) to form lithium salt; wherein said ion exchange particles contain coated ion exchange particles, and said coated ion exchange particles contain an ion exchange material and a coating material, consisting of a chloro-polymer, a fluoro-polymer, a chloro-fluoro-polymer, a chloro-fluoro-polymer, a hydrophilic polymer, a hydrophobic polymer, copolymers thereof, mixtures thereof or combinations thereof.

Additionally, publication RU2016103702 describes a Plant for obtaining high-purity lithium hydroxide monohydrate from natural brines containing lithium, comprising a device for obtaining primary lithium concentrate, connected by piping and fittings with the natural source of brine, a mother brine receiver, a vessel for collecting primary lithium concentrate, and a fresh water source; an electrolysis unit containing a membrane electrolyzer with a power supply; catholyte and anolyte tanks; catholyte and anolyte circulation pumps; gas separators for cathodic hydrogen and anodic chlorine; an evaporation unit to evaporate the lithium hydroxide solution and separate LiOH.H2O crystals, including an evaporator, a crystallizer, a condenser for condensate vapor, a centrifuge to separate LiOH·H2O crystals from the mother brine sources, a pump to supply catholyte for evaporation; an evaporator to concentrate a lithium chloride solution purified from impurities, a vessel to collect a stripped lithium chloride solution with a pump to transport it, an absorber to utilize chlorine from the anode by absorption with an aqueous solution containing urea, with a tank, a circulation pump and a ventilation unit, an absorber to harness excess anodic chlorine with a ventilation unit, a tank for collecting condensate, a source of heating steam, a source of cooling water, characterized in that the installation for implementing the method contains, in addition, a reverse osmosis concentrator-desalter, a reactor with a stirrer, for the purification of reagents from a reverse osmosis concentrate, a filter press for sediment separation and a vessel for the collection of purified reverse osmosis concentrate; an electrodialysis concentrator for concentrating the reverse osmosis concentrate purified from impurities, two ion exchange columns for deep purification of the electrodialysis concentrate, a vessel with hydrochloric acid solution, a vessel with lithium hydroxide solution, an evaporator for deep evaporation of the electrodialysis concentrate, a refrigerated vessel with a stirrer for crystallization of precipitated NaCl salts from K and a filter for their separation, a mixer to prepare an anolyte filling solution for electrochemical conversion of chloride to lithium hydroxide; countercurrent screw washer for LiOH·H2O crystals; a vacuum dryer and a filling machine for lithium hydroxide monohydrate and an absorber for the absorption of sodium chloride.

Unlike the previously described systems of the prior art, the system of this invention does not carry out concentration processes such as electrodialysis, nor reverse osmosis, nor electrochemical processes, such as electrolysis for conversion of LiCI into LiOH. Therefore, it is possible to have a system that operates under completely different principles for the formation of LiOH and its conversion from LiCI, based on the concept of fractional crystallization.

In particular, the difference with the Russian patent is the conversion technology developed to transform LiCI into LiOH.H2O. In the present invention, conversion occurs by the chemical reaction of LiCI with NaOH, and separation from NaCl occurs by fractional crystallization. In document RU2016103702, they use an electrochemical method as conversion technology, where the process is carried out by applying energy to an electrochemical system using a membrane separating cations and anions.

### BRIEF DESCRIPTION OF THE FIGURES

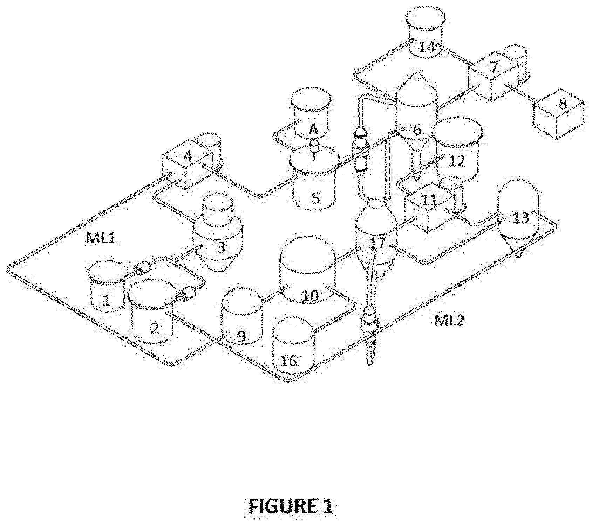

Figure 1: It represents an isometric view of the invention's general system, where all the equipment composing the system for the direct production of LiOH.H₂O from LiCI is shown.
Figure 2: It represents an isometric view of a preferred embodiment of the system of the invention in which the high purity LiOH.H2O production sub-system is composed of at least two crude LiOH,H₂O crystallizers and at least one high purity LiOH·H₂O crystallizer.

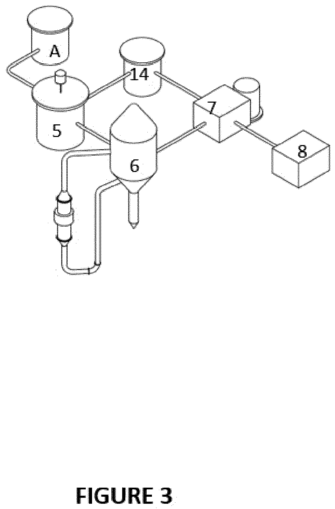

Figure 3: It is an isometric view showing the high purity LiOH·H₂O production sub-system.
Figure 4: It is an isometric view of a preferred embodiment of the system of the invention in which the NaCl production sub-system comprising an evaporation or water removal system and at least one NaCl crystallizer is illustrated.

The figures are merely illustrative and any extension of system components and auxiliary equipment will be understood to be included within the scope of protection.

Each sub-system may include a purge for the benefit of the quality of the final product.

### DESCRIPTION OF THE INVENTION

The system for the production of lithium hydroxide (LiOH) directly from lithium chloride (LiCI), without the need for intermediate production of lithium carbonate or the like, consists of two sub-systems, a high purity LiOH.H₂O production sub-system and a NaCl production sub-system.

The system comprises a LiCI brine tank (1) and a tank of mother liquor from the NaCl sub-system (2), which are connected to the high purity LiOH production sub-system, which comprises a conversion equipment (3) from LiCI to crude LiOH.H2O. The conversion equipment (3) is a crystallizer equipment that generates a crude LiOH.H2O stream. The conversion equipment (3) is connected to a solid-liquid separation equipment (4) from which two streams are generated: a liquid solution (ML1) composed of mother liquor 1, which is fed from the solid-liquid separation equipment (4) to a tank (9) of mother liquor 1 at the inlet of the NaCl production sub-system; and a second stream composed of crude LiOH.H₂O crystals which is fed from the same solid-liquid separation equipment (4) to a dilution tank (5) . Equipment (4) can be, for example, a centrifuge equipment. This dilution tank (5) is connected to at least one crystallizing equipment (6) where high purity LiOH,H₂O is produced. Similarly, tank (A) provides the necessary water for dissolving crude LiOH·H₂O within tank (5). The LiOH.H₂O crystallizing equipment is connected to a second solid-liquid separation equipment (7) which has two outputs from which two products are generated: one output with a solid stream of high purity LiOH.H₂O crystals which is sent to a crystal drying unit (8); and another output with a liquid stream of pure LiOH liquor which can be recycled directly to crystallizer (6).

The NaCl production sub-system is made up of said receiving tank (9) of mother liquor 1 and a NaOH tank (16), and both tanks in turn are connected to a causticizing unit (10), which is connected to an evaporation or water withdrawal system from the fed solution, and NaCl crystallizing unit (17). From the latter two outputs are generated; one is NaCl liquor that is connected to the NaCl liquor tank (13), being this NaCl liquor the mother liquor 2 (ML2) that is fed to the ML2 tank; and the other output is a NaCl pulp that is connected to a third solid-liquid separation equipment (11) from where the separation of NaCl crystals that are stored in the NaCl crystals unit (12) takes place. The NaCl or ML2 (13) liquor tank is connected to the initial NaCl liquor tank (2), and, thus, both sub-systems - the high purity LiOH.H₂O production system and the NaCl production system - are connected via the mother liquor 1 and mother liquor 2 circuits, creating a circular system that enables the production of high-purity LiOH.H₂O directly from LiCI brines, without NaCl co-precipitation.

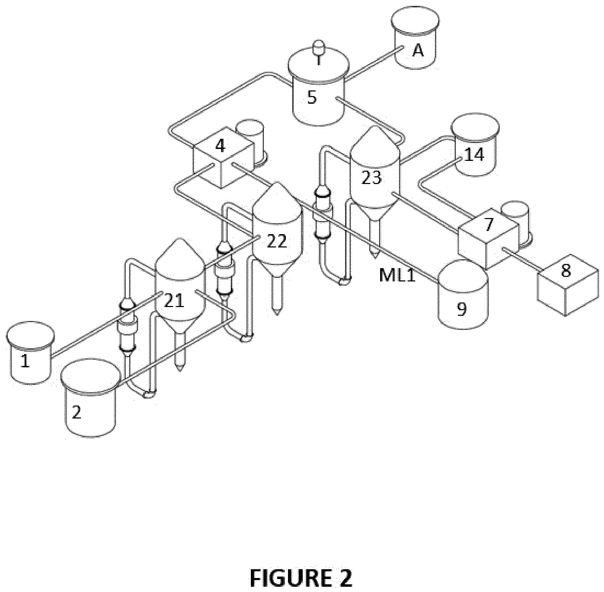

In the invention's preferred method of execution, the high purity LiOH.H₂O production sub-system comprises at least two crystallization equipment for crude LiOH.H₂O (21 and 22). The LiOH crystallization tanks can be arranged in series (as illustrated in figure 2). Regarding the method shown therein, the crystallization equipment (22) is connected to the centrifuge (4), from which the mother liquor 1 (ML1) outlet is connected with the reception tank (9) of said ML1. In this preferred method of the invention, the high purity LiOH production sub-system additionally comprises at least one high purity LiOH.H₂O crystallization equipment (23). The crystallization equipment (23) is connected to a solid-liquid separation equipment (7), from which two outlets are generated: one corresponding to the high purity LiOH liquor outlet directed to the tank (14), which can recycles the stream directely to crystallization equipment (23) ; and another outlet corresponding to the high purity LiOH.H₂O crystals, which is connected to the crystal drying unit (8).

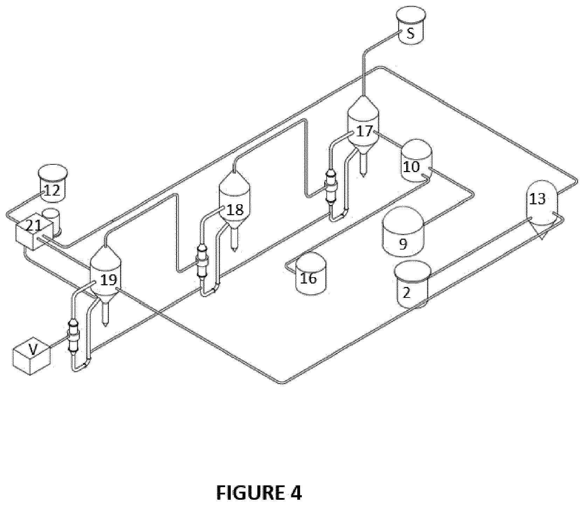

In another preferred method of the invention, the NaCl production sub-system comprises multiple evaporator systems and a crystallizer equipment, as illustrated in figure 4. In this preferred method of the invention, the NaCl crystallization sub-system comprises evaporator and crystallization equipment (17), (18) and (19), connected in series, where the causticizing equipment (10) - which is connected to the reception tank (9) of mother liquor 1(ML1) and to the NaOH tank (16) which feed the causticizing equipment (10) - is connected to the NaCl evaporation and crystallization system that initiates with the unit (17). Moreover, the last equipment of the NaCl evaporation and crystallization system (19) is connected to a solid-liquid separation equipment (21), from which a solid flow exits towards the NaCl crystal storage equipment (12), since the NaCl liquor outlet of the solid-liquid equipment (21) can be connected directly to the NaCl liquor tank (13) and, from there, directly feed mother liquor 2 (ML2) to the NaCl liquor tank (2) at the start of the system. Likewise, in order to perform the evaporation, the unit (19) has an inlet from a steam generator (V). The cycle is closed with the steam outlet from the unit (17), through the outlet (S).

## Claims

1. System for the production of lithium hydroxide (LiOH) directly from lithium chloride(LiCI), without requiring the intermediate production of lithium carbonate or any other similar compound, Wherein it is comprises by two sub-systems, a high purity LiOH.H₂O production sub-system and a NaCl production sub-system, in that said system comprises a LiCI brine tank and a NaCl liquor tank, which are connected to the high purity LiOH.H2O production sub-system, which comprises an equipment for the conversion of LiCI to crude LiOH.H2O; where the conversion equipment is connected to a solid-liquid separation equipment and the latter to a reception tank and where, additionally, the solid-liquid separation equipment is connected to a crude LiOH.H2O dilution tank, and this dilution tank is connected to at least one LiOH.H2O crystallizer equipment, where the high purity LiOH.H2O is produced; where the high purity LiOH crystallizer equipment is connected to a second solid-liquid separation equipment, which is connected to a crystal dryer; and a tank containing pure LiOH liquor which can be recycled ; where the NaCl production sub-system is composed by a reception tank and a NaOH tank, in which both tanks, in turn, are connected to a causticizing equipment, which is connected to, at least, one NaCl crystallization evaporation system, from which a NaCl liquor pipe is connected, which is connected to a NaCl liquor tank, and such NaCl liquor tank is connected to initial NaCl liquor tank; and a second connection of concentrate NaCl, which is connected to at least one solid-liquid separation equipment from which the separation of the NaCl crystals occurs, and the same are stored in a NaCl crystal tank; where said NaCl liquor tank is connected to initial NaCl liquor tank; and thus, both sub-systems - the system for the production of high purity LiOH.H2O and the system for the production of NaCl - are connected.

2. System for the production of lithium hydroxide monohydrated (LiOH.H2O) directly from lithium chloride (LiCI), in accordance with claim 1, Wherein said conversion equipment is a crystallizer equipment that generates a stream of crude LiOH.H2O.

3. System for the production of lithium hydroxide monohydrated (LiOH.H2O) directly from lithium chloride (LiCI), in accordance with claim 1, Wherein said high purity LiOH.H2O production sub-system additionally comprises at least one equipment for the crystallization of crude LiOH.H2O.

4. System for the production of lithium hydroxide monohydrated (LiOH.H2O) directly from lithium chloride (LiCI), in accordance with claim 3, Wherein said crude LiOH crystallization equipment can be arranged in series with another crystallizer equipment.

5. System for the production of lithium hydroxide monohydrated (LiOH.H2O) directly from lithium chloride (LiCI), in accordance with claim 4, Wherein one of said crude LiOH crystallization equipment is connected to said solid-liquid separation equipment, from which it connects to the reception tank.

6. System for the production of lithium hydroxide monohydrated (LiOH.H2O) directly from lithium chloride (LiCI), in accordance with claim 1, Wherein said high purity LiOH production sub-system additionally comprises at least one equipment for the crystallization of high purity LiOH.H2O.

7. System for the production of lithium hydroxide monohydrated (LiOH.H2O) directly from lithium chloride (LiCI) in accordance with claim 1, Wherein said NaCl production sub-system, additionally comprises multiple evaporators equipment connected in series and a crystallizer, where such causticizing equipment - which, in turn, is connected to the reception tank and to the NaOH tank that feeds said causticizing equipment - is connected to the NaCl crystallization equipment.
